(19) Europäisches Patentamt
European Patent Office
Office européen des brevets

(11) **EP 3 689 741 A1**

(12) **EUROPEAN PATENT APPLICATION**
published in accordance with Art. 153(4) EPC

(43) Date of publication:
**05.08.2020 Bulletin 2020/32**

(51) Int Cl.:
**B64C 27/00** (2006.01)

(21) Application number: **19874616.6**

(22) Date of filing: **04.09.2019**

(86) International application number:
**PCT/CN2019/104393**

(87) International publication number:
**WO 2020/078139 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2018 CN 201811199814**

(71) Applicant: **Beijing Institute Of Technology Beijing 100081 (CN)**

(72) Inventors:
• **MA, Yue**
  **Beijing 100081 (CN)**
• **XIANG, Changle**
  **Beijing 100081 (CN)**
• **HUANG, Bin**
  **Beijing 100081 (CN)**
• **LIN, Lu**
  **Beijing 100081 (CN)**

(74) Representative: **Swindell & Pearson Limited**
**48 Friar Gate**
**Derby DE1 1GY (GB)**

(54) **CONTROL METHOD AND SYSTEM EMPLOYING VERTICAL TAKE-OFF OF FLYING AND DRIVING VEHICLE**

(57) The present invention acquires an initial manipulated variable and then determines, based on a genetic algorithm, an optimized manipulated variable according to the initial manipulated variable; builds a land-and-air vehicle jump takeoff model; performs normalization on the optimized manipulated variable; inputs normalized processing data to the land-and-air vehicle jump takeoff model, to obtain an end-of-jump-takeoff manipulated vector of the land-and-air vehicle; calculates a minimum margin of error according to the end-of-jump-takeoff manipulated vector of the land-and-air vehicle; judges whether the minimum margin of error is within a prespecified range; if the minimum margin of error is not within the prespecified range, uses the optimized manipulated variable as the initial manipulated variable and returns to the determining an optimized manipulated variable; if the minimum margin of error is within the prespecified range, outputs the optimized manipulated variable so that land-and-air vehicle jump takeoff is controlled based on the optimized manipulated variable, realizing that the state manipulated variable at the end of jump takeoff is close to the state manipulated variable in forward flight to the fullest extent possible.

S1 Acquiring an initial manipulated variable for a jump takeoff longitudinal movement

S2 Building a land-and-air vehicle jump takeoff model

S3 Determining, based on a genetic algorithm, an optimized manipulated variable according to the initial manipulated variable

S4 Performing normalization on the optimized manipulated variable, to obtain normalized processing data

S5 Inputting normalized processing data to the land-and-air vehicle jump takeoff model, which outputs an end-of-jump-takeoff manipulated vector of the land-and-air vehicle

S6 Calculating minimum margin of error according to the end-of-jump-takeoff manipulated vector of the land-and-air vehicle

S7 Minimum margin of error is within a prespecified range

S8 Using optimized manipulated variable as the initial manipulated variable

NO / YES

S9 Outputting optimized manipulated variable so that land-and-air vehicle jump takeoff is controlled based on the optimized manipulated variable

FIG. 1

## Description

The present application claims the benefit of Chinese patent application No. 201811199814.7, titled "Control Method for Land-and-air Vehicle Jump Takeoff and System Thereof' and filed with the China National Intellectual Property Administration on October 16, 2018, which is incorporated by reference herein in its entirety.

## TECHNICAL FIELD

The present invention relates to the technical field of control techniques for vehicle jump takeoff, in particular to a control method for land-and-air vehicle jump takeoff and a system thereof.

## BACKGROUND

Jump takeoff is the phase in which rotor blades are at zero-lift angle of attack, and the engine drives the rotor to a certain rate through a transmission system, the certain rate being generally 1.5 times the rotation rate of the rotor in minimum-speed stable forward flight, then the clutch is disengaged to cut off the torque transfer between the engine and the rotor, and the angle of attack of the rotor blades is increased to a certain value, which generate a lift significantly greater than the force of gravity of the aircraft, achieving a super-short near-vertical takeoff. Jump takeoff is a transitional operating mode between taxing on the ground and stable forward flight. Hence, the indicator of a successful jump takeoff is, when the rotation rate of the rotor decreases to the rate in minimum-speed stable forward flight, the horizontal forward speed of the land-air vehicle should not be less than the minimum stable forward flight speed; the indicator of a successful jump takeoff is not, contrary to popular belief, the height above ground of the highest point of the trajectory at zero speed. In addition, there are relatively few studies on the flight control of land-and-air vehicles, especially researches on jump takeoff control.

## SUMMARY OF INVENTION

An object of the present invention is to provide a control method for land-and-air vehicle jump takeoff and a system thereof, which realizes that the state at the end of jump takeoff is close to the state in forward flight to the fullest extent possible.

In order to achieve the above object, the present invention provides a control method for land-and-air vehicle jump takeoff, the control method including:

S1: acquiring an initial manipulated variable for a jump takeoff longitudinal movement, the initial manipulated variable including: an initial rotor collective pitch, an initial lateral rotor disk tilt angle, an initial propeller rotation rate;

S2: building a land-and-air vehicle jump takeoff model;

S3: determining, based on a genetic algorithm, an optimized manipulated variable according to the initial manipulated variable, the optimized manipulated variable including: an optimized rotor collective pitch, an optimized lateral rotor disk tilt angle, an optimized propeller rotation rate;

S4: performing normalization on the optimized manipulated variable, to obtain normalized processing data;

S5: inputting the normalized processing data to the land-and-air vehicle jump takeoff model, which outputs an end-of-jump-takeoff manipulated vector of the land-and-air vehicle;

S6: calculating a minimum margin of error according to the end-of-jump-takeoff manipulated vector of the land-and-air vehicle;

S7: judging whether the minimum margin of error is within a prespecified range;

S8: if the minimum margin of error is not within the prespecified range, using the optimized manipulated variable as the initial manipulated variable and returning to step S3;

S9: if the minimum margin of error is within the prespecified range, outputting the optimized manipulated variable so that land-and-air vehicle jump takeoff is controlled based on the optimized manipulated variable.

Optionally, the building a land-and-air vehicle jump takeoff model may include:

building an objective function for a land-and-air vehicle jump takeoff model;
building a constraint for the land-and-air vehicle jump takeoff model.

Optionally, the building an objective function for a land-and-air vehicle jump takeoff model may use the following formula:

$$\dot{x}(t) = f\left(x(t), u(t)\right), \quad x(t_0) = x_0$$

where x(t) is a time derivative function; $x(t_0)$ is the state at the beginning of jump takeoff; x(t) is a system state variable, the system state variable including: an optimized attitude angle of the land-and-air vehicle, an optimized linear speed and an optimized angular velocity; u(t) is a system input variable, the system input variable including: an optimized rotor collective pitch, an optimized longitudinal rotor disk tilt angel, an optimized lateral rotor disk tilt angle, an optimized vertical tail deflection angle, an optimized propeller rotation rate; f(x(t),u(t)) are equations of state.

Optionally, the building a constraint for the land-and-air vehicle jump takeoff model may use the following formula:

$$\begin{cases} 0 \le \delta_{col} \le 8 \cdot pi / 180 \\ -10 \cdot pi / 180 \le \delta_{fl} \le 10 \cdot pi / 180 \\ 0 \le \Omega_{pr} \le 4000 \cdot pi / 30 \\ X_{\varepsilon} \ge 0, H \ge 0 \\ H + 3Re^{-0.2X_{\varepsilon}} - 3R \ge 0 \end{cases}$$

where $\delta_{col}$ is the optimized rotor collective pitch, $\delta_{fl}$ is the optimized lateral rotor disk tilt angle, $\Omega_{pr}$ is the optimized propeller rotation rate, Pi is 3.14159, $X_e$ is a forward displacement of the land-and-air vehicle during the jump takeoff, H is the height above ground of the land-and-air vehicle during jump takeoff, R is the radius of the rotor blades of the land-and-air vehicle.

Optionally, the calculating a minimum margin of error according to the end-of-jump-takeoff manipulated vector of the land-and-air vehicle may use the following formula:

$$\min J = e^{T}\left(t_f\right) * Q * e\left(t_f\right)$$

where J is the margin of error; Q is a weighting matrix; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f) = x(t_f) - x_{optrim}$; $e^{T}(t_f)$ is the transposed matrix of $e(t_f)$.

Optionally, the determining, based on a genetic algorithm, optimized manipulated variable according to the initial manipulated variable, may use the following formula:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_{f} = \frac{\delta_{f\_initial} - \delta_{f\_optrim}}{\Omega_{initial} - \Omega_{optrim}}\left(\Omega - \Omega_{optrim}\right) + \delta_{f\_optrim}$$

$$\Omega_{pr} = \frac{\Omega_{pr\_initial} - \Omega_{pr\_optrim}}{\Omega_{initial} - \Omega_{optrim}}\left(\Omega - \Omega_{optrim}\right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

The present invention also provides a control system for land-and-air vehicle jump takeoff, the control system including:

an acquisition module, configured to acquire an initial manipulated variable for a jump takeoff longitudinal movement, the initial manipulated variable including: an initial rotor collective pitch, an initial lateral rotor disk tilt angle, an initial propeller rotation rate;

a model building module, configured to build a land-and-air vehicle jump takeoff model;

an optimized manipulated variable determining module, configured to determine, based on a genetic algorithm, an optimized manipulated variable according to the initial manipulated variable, the optimized manipulated variable including: an optimized rotor collective pitch, an optimized lateral rotor disk tilt angle, an optimized propeller rotation rate;

a normalization module, configured to perform normalization on the optimized manipulated variable, to obtain normalized processing data;

an inputting module, configured to input the normalized processing data to the land-and-air vehicle jump takeoff model, which outputs an end-of-jump-takeoff manipulated vector of the land-and-air vehicle;

a minimum margin of error determining module, configured to calculate a minimum margin of error according to the end-of-jump-takeoff manipulated vector of the land-and-air vehicle;

a judging and outputting module, adapted to judge whether the minimum margin of error is within a prespecified range, and if the minimum margin of error is not within the prespecified range, use the optimized manipulated variable as the initial manipulated variable and return to the optimized manipulated variable determining module; if the minimum margin of error is within the prespecified range, output the optimized manipulated variable so that land-and-air vehicle jump takeoff is controlled based on the optimized manipulated variable.

Optionally, the model building module may include:

an objective function building unit, configured to build an objective function for a land-and-air vehicle jump takeoff model;

a constraint building unit, configured to build a constraint for the land-and-air vehicle jump takeoff model.

Optionally, the calculating a minimum margin of error according to the end-of-jump-takeoff manipulated vector of the land-and-air vehicle may use the following formula:

$$\min J = e^T\left(t_f\right) * Q * e\left(t_f\right)$$

where $J$ is the margin of error; $Q$ is a weighting matrix; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f) = x(t_f) - x_{optrim}$; $e^T(t_f)$ is the transposed matrix of $e(t_f)$.

Optionally, the determining, based on a genetic algorithm, an optimized manipulated variable according to the initial manipulated variable may use the following formula:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_f = \frac{\delta_{f\_initial} - \delta_{f\_optrim}}{\Omega_{initial} - \Omega_{optrim}} \left( \Omega - \Omega_{optrim} \right) + \delta_{f\_optrim}$$

$$\Omega_{pr} = \frac{\Omega_{pr\_initial} - \Omega_{pr\_optrim}}{\Omega_{initial} - \Omega_{optrim}} \left( \Omega - \Omega_{optrim} \right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

According to the embodiments, the present invention discloses the following technical effects:

The present invention acquires an initial manipulated variable and then determines, based on a genetic algorithm, an optimized manipulated variable according to the initial manipulated variable; builds a land-and-air vehicle jump takeoff model; performs normalization on the optimized manipulated variable; inputs normalized processing data to the land-and-air vehicle jump takeoff model, to obtain an end-of-jump-takeoff manipulated vector of the land-and-air vehicle; calculates a minimum margin of error according to the end-of-jump-takeoff manipulated vector of the land-and-air vehicle; judges whether the minimum margin of error is within a prespecified range; if the minimum margin of error is not within the prespecified range, uses the optimized manipulated variable as the initial manipulated variable and returns to the determining an optimized manipulated variable; if the minimum margin of error is within the prespecified range, outputs the optimized manipulated variable so that land-and-air vehicle jump takeoff is controlled based on the optimized manipulated variable, realizing that the state manipulated variable at the end of jump takeoff is close to the state manipulated variable in forward flight to the fullest extent possible.

## BRIEF DESCRIPTION OF THE DRAWINGS

FIG. 1 is a flowchart illustrating a control method for land-and-air vehicle jump takeoff according to an embodiment of the present invention;

FIG. 2 is a structural diagram illustrating a control system for land-and-air vehicle jump takeoff according to an embodiment of the present invention.

## DETAILED DESCRIPTION OF PARTICULAR EMBODIMENTS

The present invention will be described in more detail with reference to the embodiments and accompanying drawings.

Jump takeoff is the phase in which rotor blades are at zero-lift angle of attack, and the engine drives the rotor to a certain rate through a transmission system, then the clutch is disengaged to cut off the torque transfer between the engine and the rotor, and the angle of attack of the rotor blades is increased to a certain value, which generate a lift significantly greater than the force of gravity of the aircraft, achieving a super-short near-vertical takeoff.

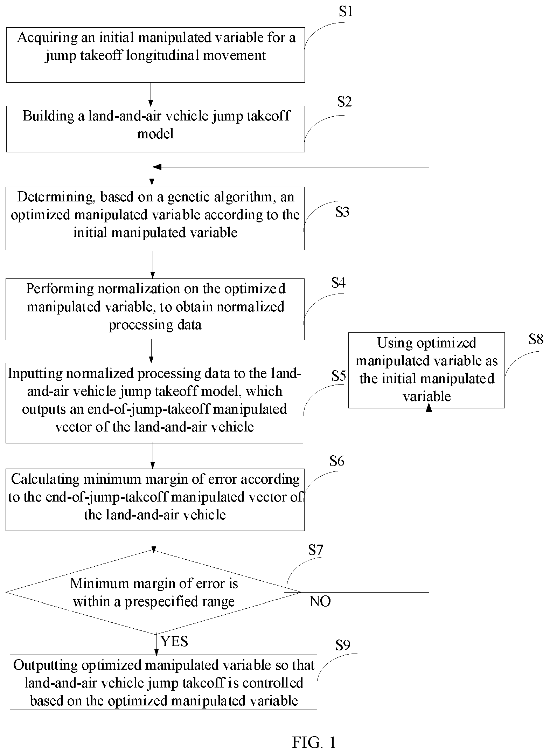

FIG. 1 is a flowchart illustrating a control method for land-and-air vehicle jump takeoff according to an embodiment of the present invention. As shown in FIG. 1, the present invention provides a control method for land-and-air vehicle jump takeoff; the control method includes:

S1: acquiring an initial manipulated variable for a jump takeoff longitudinal movement, the initial manipulated variable including: an initial rotor collective pitch, an initial lateral rotor disk tilt angle, an initial propeller rotation rate;

S2: building a land-and-air vehicle jump takeoff model;

S3: determining, based on a genetic algorithm, an optimized manipulated variable according to the initial manipulated variable, the optimized manipulated variable including: an optimized rotor collective pitch, an optimized lateral rotor disk tilt angle, an optimized propeller rotation rate;

S4: performing normalization on the optimized manipulated variable, to obtain normalized processing data;

S5: inputting the normalized processing data to the land-and-air vehicle jump takeoff model, which outputs an end-of-jump-takeoff manipulated vector of the land-and-air vehicle, the end-of-jump-takeoff manipulated vector of the land-and-air vehicle including: an end-of-jump-takeoff rotor rotation rate, an end-of-jump-takeoff attitude angle, an end-of-jump-takeoff speed, an end-of-jump-takeoff jump takeoff trajectory;

S6: calculating a minimum margin of error according to the end-of-jump-takeoff manipulated vector of the land-and-air vehicle;

S7: judging whether the minimum margin of error is within a prespecified range;

S8: if the minimum margin of error is not within the prespecified range, using the optimized manipulated variable as the initial manipulated variable and returning to step S3;

S9: if the minimum margin of error is within the prespecified range, outputting the optimized manipulated variable so that land-and-air vehicle jump takeoff is controlled based on the optimized manipulated variable.

The steps are described in detail below.

S2: The building a land-and-air vehicle jump takeoff model may include:

S21: building an objective function for a land-and-air vehicle jump takeoff model, the formula being:

$$\dot{x}(t) = f\left(x(t), u(t)\right), \quad x(t_0) = x_0$$

where $\dot{x}(t)$ is a time derivative function; $x(t_0)$ is the state at the beginning of jump takeoff, $x(t_0) = [0\ 0\ 0\ 0\ 0\ 0\ 0\ 0\ 0\ 90\ 0\ 0]$; $x(t)$ is a system state variable, the system state variable including: an optimized attitude angle of the land-and-air vehicle, an optimized linear speed and an optimized angular velocity; $u(t)$ is a system input variable, the system input variable including: an optimized rotor collective pitch, an optimized longitudinal rotor disk tilt angel, an optimized lateral rotor disk tilt angle, an optimized vertical tail deflection angle, an optimized propeller rotation rate; $f(x(t), u(t))$ are equations of state.

S22: building a constraint for the land-and-air vehicle jump takeoff model, the formula being:

$$\begin{cases} 0 \leq \delta_{col} \leq 8 \cdot pi/180 \\ -10 \cdot pi/180 \leq \delta_{fl} \leq 10 \cdot pi/180 \\ 0 \leq \Omega_{pr} \leq 4000 \cdot pi/30 \\ X_\varepsilon \geq 0, H \geq 0 \\ H + 3Re^{-0.2X_\varepsilon} - 3R \geq 0 \end{cases}$$

where $\delta_{col}$ is the optimized rotor collective pitch, $\delta_{fl}$ is the optimized lateral rotor disk tilt angle, $\Omega_{pr}$ is the optimized propeller rotation rate, Pi is 3.14159, $X_e$ is a forward displacement of the land-and-air vehicle during the jump takeoff, $H$ is the height above ground of the land-and-air vehicle during jump takeoff, $R$ is the radius of the rotor blades of the land-and-air vehicle.

S3: The determining, based on a genetic algorithm, optimized manipulated variable according to the initial manipulated variable, may use the following formula:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_f = \frac{\delta_{f\_initial} - \delta_{f\_optrim}}{\Omega_{initial} - \Omega_{optrim}} \left( \Omega - \Omega_{optrim} \right) + \delta_{f\_optrim}$$

$$\Omega_{pr} = \frac{\Omega_{pr\_initial} - \Omega_{pr\_optrim}}{\Omega_{initial} - \Omega_{optrim}} \left( \Omega - \Omega_{optrim} \right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

S6: The calculating a minimum margin of error according to the end-of-jump-takeoff manipulated vector of the land-and-air vehicle may use the following formula:

$$\min J = e^T \left( t_f \right) * Q * e \left( t_f \right)$$

where $J$ is the margin of error; $Q$ is a weighting matrix, which is diagonal and to describe the variable in the manipulated vector with respect to their levels of importance; $e^T(t_f)$ is the transposed matrix of $e(t_f)$; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f)=x(t_f)-x_{optrim}$; $x_{optrim}$ is obtained from trimming the nonlinear model of the land-and-air vehicle, the manipulated vector of the land-and-air vehicle in low speed forward flight at an initial moment of low-speed forward flight is $x_{optrim}$ = [0 0.41 0 0 0 0 9.2 0 4 63 0.01 0]$^T$.

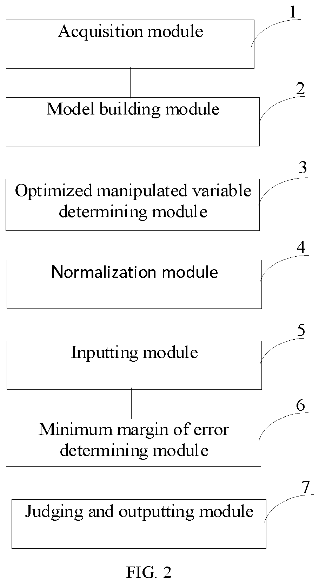

FIG. 2 is a structural diagram illustrating a control system for land-and-air vehicle jump takeoff according to an embodiment of the present invention. As shown in FIG. 2, the present invention provides a control system for land-and-air vehicle jump takeoff; the control system includes:

an acquisition module 1, configured to acquire an initial manipulated variable for a jump takeoff longitudinal movement, the initial manipulated variable including: an initial rotor collective pitch, an initial lateral rotor disk tilt angle, an initial propeller rotation rate;

a model building module 2, configured to build a land-and-air vehicle jump takeoff model;

an optimized manipulated variable determining module 3, configured to determine, based on a genetic algorithm, an optimized manipulated variable according to the initial manipulated variable, the optimized manipulated variable including: an optimized rotor collective pitch, an optimized lateral rotor disk tilt angle, an optimized propeller rotation rate;

a normalization module 4, configured to perform normalization on the optimized manipulated variable, to obtain normalized processing data;

an inputting module 5, configured to input the normalized processing data to the land-and-air vehicle jump takeoff model, which outputs an end-of-jump-takeoff manipulated vector of the land-and-air vehicle;

a minimum margin of error determining module 6, configured to calculate a minimum margin of error according to the end-of-jump-takeoff manipulated vector of the land-and-air vehicle;

a judging and outputting module 7, adapted to judge whether the minimum margin of error is within a prespecified range, and if the minimum margin of error is not within the prespecified range, use the optimized manipulated variable as the initial manipulated variable and return to the optimized manipulated variable determining module; if the minimum margin of error is within the prespecified range, output the optimized manipulated variable so that land-and-air vehicle jump takeoff is controlled based on the optimized manipulated variable.

The modules are described in detail below.

The model building module 2 may include:

> an objective function building unit, configured to build an objective function for a land-and-air vehicle jump takeoff model;
> a constraint building unit, configured to build a constraint for the land-and-air vehicle jump takeoff model.

The minimum margin of error determining module may use the following formula to calculate a minimum margin of error according to the end-of-jump-takeoff manipulated vector of the land-and-air vehicle:

$$\min J = e^T\left(t_f\right) * Q * e\left(t_f\right)$$

where $J$ is the margin of error; $Q$ is a weighting matrix; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f) = x(t_f) - x_{optrim}$ ; $e^T(t_f)$ is the transposed matrix of $e(t_f)$.

The optimized manipulated variable determining module 3 may use the following formula to determine, based on a genetic algorithm, an optimized manipulated variable according to the initial manipulated variable:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_f = \frac{\delta_{f\_initial} - \delta_{f\_optrim}}{\Omega_{initial} - \Omega_{optrim}}\left(\Omega - \Omega_{optrim}\right) + \delta_{f\_optrim}$$

$$\Omega_{pr} = \frac{\Omega_{pr\_initial} - \Omega_{pr\_optrim}}{\Omega_{initial} - \Omega_{optrim}}\left(\Omega - \Omega_{optrim}\right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

In order to increase flight stability of land-and-air vehicles, the center of gravity is in front of the rotor shaft and above the propeller thrust line. At the beginning of jump takeoff, the pulling force of the rotor is large, generating a large pitching moment which causes the land-and-air vehicle to dive; however, the pitching moment drops sharply as the rotation rate of the rotor decreases. The change in pitch angle is crucial to the height of jump takeoff and the rate of climb during jump takeoff. Severe lift-up or dive of the land-and-air vehicle during jump takeoff may reduce the height of the jump takeoff and the rate of climb during the jump takeoff.

It is desired that during the jump takeoff of a land-and-air vehicle, it moves mainly in the longitudinal plane, without lateral movement or heading movement. Collective pitch angle, back rotor disk tilt angle and propeller rotation rate are main manipulated variables that could change the longitudinal movement of the land-and-air vehicle. They play a major role in the changes of the longitudinal state variable height, forward speed, vertical speed, pitch angle and longitudinal flapping angle. In order to realize the transition of a land-and-air vehicle from taxing on the ground to in-the-air flight, the present invention makes the difference between a flight state vector of the land-and-air vehicle at the end of a minimum jump takeoff and a flight state of the land-and-air vehicle in stable forward flight as the objective function, makes the realization of jump takeoff (near-vertical takeoff) as the constraint function, and optimizes longitudinal manipulated input variables in jump takeoff, so that the state manipulated variables at the end of jump takeoff are close to the state manipulated variables in forward flight to the fullest extent possible.

The description of the embodiments herein is solely for a better understanding of the method of the present invention and its core idea. It should be noted that those skilled in the art could make various improvements or modifications to the present invention without departing from the principle of the present invention, which shall fall within the scope of the present invention. Various modifications to the embodiments herein may apparent to those skilled in the art; and the general principles disclosed herein may be implemented in other embodiments without departing from the spirit or scope of the present invention. Therefore, the present invention shall not be limited to the embodiments herein, but shall conform to the widest scope consistent with the principles and novel features disclosed herein.

**Claims**

1. A control method for land-and-air vehicle jump takeoff, the control method comprising:

    S1: acquiring an initial manipulated variable for a jump takeoff longitudinal movement, the initial manipulated variable comprising: an initial rotor collective pitch, an initial lateral rotor disk tilt angle, an initial propeller rotation rate;
    S2: building a land-and-air vehicle jump takeoff model;
    S3: determining, based on a genetic algorithm, an optimized manipulated variable according to the initial manipulated variable, the optimized manipulated variable comprising: an optimized rotor collective pitch, an optimized lateral rotor disk tilt angle, an optimized propeller rotation rate;
    S4: performing normalization on the optimized manipulated variable, to obtain normalized processing data;
    S5: inputting the normalized processing data to the land-and-air vehicle jump takeoff model, which outputs an end-of-jump-takeoff manipulated vector of the land-and-air vehicle;
    S6: calculating a minimum margin of error according to the end-of-jump-takeoff manipulated vector of the land-and-air vehicle;
    S7: judging whether the minimum margin of error is within a prespecified range;
    S8: if the minimum margin of error is not within the prespecified range, using the optimized manipulated variable as the initial manipulated variable and returning to step S3;
    S9: if the minimum margin of error is within the prespecified range, outputting the optimized manipulated variable so that land-and-air vehicle jump takeoff is controlled based on the optimized manipulated variable.

2. The control method according to claim 1, wherein the building a land-and-air vehicle jump takeoff model comprises:

    building an objective function for a land-and-air vehicle jump takeoff model;
    building a constraint for the land-and-air vehicle jump takeoff model.

3. The control method according to claim 2, wherein the building an objective function for a land-and-air vehicle jump takeoff model uses the following formula:

$$\dot{x}(t) = f\big(x(t), u(t)\big), \quad x(t_0) = x_0$$

where $\dot{x}(t)$ is a time derivative function; $x(t_0)$ is the state at the beginning of jump takeoff; x(t) is a system state variable, the system state variable comprising: an optimized attitude angle of the land-and-air vehicle, an optimized linear speed and an optimized angular velocity; u(t) is a system input variable, the system input variable comprising: an optimized rotor collective pitch, an optimized longitudinal rotor disk tilt angel, an optimized lateral rotor disk tilt angle, an optimized vertical tail deflection angle, an optimized propeller rotation rate; f(x(t),u(t)) are equations of state.

4. The control method according to claim 2, wherein the building a constraint for the land-and-air vehicle jump takeoff model uses the following formula:

$$\begin{cases} 0 \le \delta_{col} \le 8 \cdot pi / 180 \\ -10 \cdot pi / 180 \le \delta_{fl} \le 10 \cdot pi / 180 \\ 0 \le \Omega_{pr} \le 4000 \cdot pi / 30 \\ X_{\varepsilon} \ge 0, H \ge 0 \\ H + 3Re^{-0.2X_{\varepsilon}} - 3R \ge 0 \end{cases}$$

where $\delta_{col}$ is the optimized rotor collective pitch, $\delta_{fl}$ is the optimized lateral rotor disk tilt angle, $\Omega_{pr}$ is the optimized

propeller rotation rate, Pi is 3.14159, $X_e$ is a forward displacement of the land-and-air vehicle during the jump takeoff, $H$ is the height above ground of the land-and-air vehicle during jump takeoff, $R$ is the radius of the rotor blades of the land-and-air vehicle.

**5.** The control method according to claim 1, wherein the calculating a minimum margin of error according to the end-of-jump-takeoff manipulated vector of the land-and-air vehicle uses the following formula:

$$\min J = e^T\left(t_f\right) * Q * e\left(t_f\right)$$

where $J$ is the margin of error; $Q$ is a weighting matrix; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f) = x(t_f)- x_{optrim}$ ; $e^T(t_f)$ is the transposed matrix of $e(t_f)$.

**6.** The control method according to claim 1, wherein the determining, based on a genetic algorithm, optimized manipulated variable according to the initial manipulated variable, uses the following formula:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_f = \frac{\delta_{f\_initial} - \delta_{f\_optrim}}{\Omega_{initial} - \Omega_{optrim}}\left(\Omega - \Omega_{optrim}\right) + \delta_{f\_optrim}$$

$$\Omega_{pr} = \frac{\Omega_{pr\_initial} - \Omega_{pr\_optrim}}{\Omega_{initial} - \Omega_{optrim}}\left(\Omega - \Omega_{optrim}\right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

**7.** A control system for land-and-air vehicle jump takeoff, the control system comprising:

an acquisition module, configured to acquire an initial manipulated variable for a jump takeoff longitudinal movement, the initial manipulated variable comprising: an initial rotor collective pitch, an initial lateral rotor disk tilt angle, an initial propeller rotation rate;
a model building module, configured to build a land-and-air vehicle jump takeoff model;
an optimized manipulated variable determining module, configured to determine, based on a genetic algorithm, an optimized manipulated variable according to the initial manipulated variable, the optimized manipulated variable comprising: an optimized rotor collective pitch, an optimized lateral rotor disk tilt angle, an optimized propeller rotation rate;
a normalization module, configured to perform normalization on the optimized manipulated variable, to obtain normalized processing data;
an inputting module, configured to input the normalized processing data to the land-and-air vehicle jump takeoff model, which outputs an end-of-jump-takeoff manipulated vector of the land-and-air vehicle;
a minimum margin of error determining module, configured to calculate a minimum margin of error according to the end-of-jump-takeoff manipulated vector of the land-and-air vehicle;
a judging and outputting module, adapted to judge whether the minimum margin of error is within a prespecified range, and if the minimum margin of error is not within the prespecified range, use the optimized manipulated variable as the initial manipulated variable and return to the optimized manipulated variable determining module; if the minimum margin of error is within the prespecified range, output the optimized manipulated variable so that land-and-air vehicle jump takeoff is controlled based on the optimized manipulated variable.

8. The control system according to claim 7, wherein the model building module comprises:

an objective function building unit, configured to build an objective function for a land-and-air vehicle jump takeoff model;
a constraint building unit, configured to build a constraint for the land-and-air vehicle jump takeoff model.

9. The control system according to claim 7, wherein the calculating a minimum margin of error according to the end-of-jump-takeoff manipulated vector of the land-and-air vehicle use the following formula:

$$\min J = e^{T}\!\left(t_{f}\right) * Q * e\!\left(t_{f}\right)$$

where $J$ is the margin of error; $Q$ is a weighting matrix; $e(t_f)$ is the difference between $x(t_f)$ the manipulated variable of the land-and-air vehicle at the end of jump takeoff and $x_{optrim}$ the manipulated vector of the land-and-air vehicle in low speed forward flight, i.e., $e(t_f) = x(t_f)\text{-}x_{optrim}$ ; $e^{T}(t_f)$ is the transposed matrix of $e(t_f)$.

10. The control system according to claim 7, wherein the determining, based on a genetic algorithm, an optimized manipulated variable according to the initial manipulated variable uses the following formula:

$$\delta_{col} = \frac{\delta_{col\_initial} - \delta_{col\_optrim}}{\Omega_{initial} - \Omega_{optrim}}\left(\Omega - \Omega_{optrim}\right) + \delta_{col\_optrim}$$

$$\delta_{f} = \frac{\delta_{f\_initial} - \delta_{f\_optrim}}{\Omega_{initial} - \Omega_{optrim}}\left(\Omega - \Omega_{optrim}\right) + \delta_{f\_optrim}$$

$$\Omega_{pr} = \frac{\Omega_{pr\_initial} - \Omega_{pr\_optrim}}{\Omega_{initial} - \Omega_{optrim}}\left(\Omega - \Omega_{optrim}\right) + \Omega_{pr\_optrim}$$

where $\delta_{col}$ is the optimized rotor collective pitch, $\delta_f$ is the optimized lateral rotor disk tilt angle, $\Omega_{pr}$ is the optimized propeller rotation rate, $\delta_{col\_initial}$ is the initial lateral rotor disk tilt angle, $\Omega_{pr\_initial}$ is the initial propeller rotation rate, $\delta_{col\_optrim}$ is a rotor collective pitch in low-speed forward flight, $\Omega_{pr\_optrim}$ is a propeller rotation rate in low-speed forward flight, $\delta_{f\_optrim}$ is an initial lateral rotor disk tilt angle in low-speed forward flight, $\Omega_{initial}$ is an initial rotor rotation rate, $\Omega_{optrim}$ is an rotor rotation rate in low-speed forward flight, $\Omega$ is a rotor rotation rate at the current moment.

Acquiring an initial manipulated variable for a jump takeoff longitudinal movement — S1

Building a land-and-air vehicle jump takeoff model — S2

Determining, based on a genetic algorithm, an optimized manipulated variable according to the initial manipulated variable — S3

Performing normalization on the optimized manipulated variable, to obtain normalized processing data — S4

Inputting normalized processing data to the land-and-air vehicle jump takeoff model, which outputs an end-of-jump-takeoff manipulated vector of the land-and-air vehicle — S5

Calculating minimum margin of error according to the end-of-jump-takeoff manipulated vector of the land-and-air vehicle — S6

Using optimized manipulated variable as the initial manipulated variable — S8

Minimum margin of error is within a prespecified range — S7

NO

YES

Outputting optimized manipulated variable so that land-and-air vehicle jump takeoff is controlled based on the optimized manipulated variable — S9

FIG. 1

```
          ┌─────────────────────────────┐ 1
          │      Acquisition module      │
          └─────────────────────────────┘
                         │
          ┌─────────────────────────────┐ 2
          │     Model building module    │
          └─────────────────────────────┘
                         │
          ┌─────────────────────────────┐ 3
          │  Optimized manipulated variable │
          │       determining module     │
          └─────────────────────────────┘
                         │
          ┌─────────────────────────────┐ 4
          │     Normalization module     │
          └─────────────────────────────┘
                         │
          ┌─────────────────────────────┐ 5
          │       Inputting module       │
          └─────────────────────────────┘
                         │
          ┌─────────────────────────────┐ 6
          │    Minimum margin of error   │
          │       determining module     │
          └─────────────────────────────┘
                         │
          ┌─────────────────────────────┐ 7
          │  Judging and outputting module │
          └─────────────────────────────┘
```

FIG. 2

## INTERNATIONAL SEARCH REPORT

| International application No. |
|---|
| **PCT/CN2019/104393** |

**A. CLASSIFICATION OF SUBJECT MATTER**

B64C 27/00(2006.01)i

According to International Patent Classification (IPC) or to both national classification and IPC

**B. FIELDS SEARCHED**

Minimum documentation searched (classification system followed by classification symbols)

b64c

Documentation searched other than minimum documentation to the extent that such documents are included in the fields searched

Electronic data base consulted during the international search (name of data base and, where practicable, search terms used)

VEN, CNKI, CPRSABS; 跳飞, 陆空车辆, 模型, 旋翼, 转速, 升攻角, 遗传算法, 短距, 垂直, 起飞, 目标函数, 约束条件; flight, jump+, skip+, model+, algorithm, optimiz+;

**C. DOCUMENTS CONSIDERED TO BE RELEVANT**

| Category* | Citation of document, with indication, where appropriate, of the relevant passages | Relevant to claim No. |
|---|---|---|
| PX | CN 109263864 A (BEIJING INSTITUTE OF TECHNOLOGY) 25 January 2019 (2019-01-25) claims 1-10 | 1-10 |
| A | CN 105786007 A (TSINGHUA UNIVERSITY) 20 July 2016 (2016-07-20) description, pages 1-4, and figures, page 1 | 1-10 |
| A | CN 104960664 A (BEIJING INSTITUTE OF TECHNOLOGY) 07 October 2015 (2015-10-07) entire document | 1-10 |
| A | CN 105966609 A (BEIJING INSTITUTE OF TECHNOLOGY) 28 September 2016 (2016-09-28) entire document | 1-10 |
| A | KR 101806453 B1 (INDUSTRY-UNIV COOPERATION FOUNDATION KOREA AEROSPACE UNIV) 07 December 2017 (2017-12-07) entire document | 1-10 |
| A | US 8855837 B2 (SIKORSKY AIRCRAFT CORP) 07 October 2014 (2014-10-07) entire document | 1-10 |

☑ Further documents are listed in the continuation of Box C. ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **30 September 2019** | **01 November 2019** |

| Name and mailing address of the ISA/CN | Authorized officer |
|---|---|
| **China National Intellectual Property Administration** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/104393** |

**C.    DOCUMENTS CONSIDERED TO BE RELEVANT**

| Category* | Citation of document, with indication, where appropriate, of the relevant passages | Relevant to claim No. |
| --- | --- | --- |
| A | EP 3024725 A1 (SIKORSKY AIRCRAFT CORP) 01 June 2016 (2016-06-01)<br>entire document | 1-10 |
| A | US 2016355252 A1 (STRAUB, J. ET AL.) 08 December 2016 (2016-12-08)<br>entire document | 1-10 |
| A | US 2018292835 A1 (ZENDRIVE INC.) 11 October 2018 (2018-10-11)<br>entire document | 1-10 |
| A | US 2014095001 A1 (SIKORSKY AIRCRAFT CORP) 03 April 2014 (2014-04-03)<br>entire document | 1-10 |

Form PCT/ISA/210 (second sheet) (January 2015)

**INTERNATIONAL SEARCH REPORT**
Information on patent family members

International application No.

**PCT/CN2019/104393**

| Patent document cited in search report | | | Publication date (day/month/year) | Patent family member(s) | | | Publication date (day/month/year) |
|---|---|---|---|---|---|---|---|
| CN | 109263864 | A | 25 January 2019 | None | | | |
| CN | 105786007 | A | 20 July 2016 | CN | 105786007 | B | 02 October 2018 |
| CN | 104960664 | A | 07 October 2015 | None | | | |
| CN | 105966609 | A | 28 September 2016 | None | | | |
| KR | 101806453 | B1 | 07 December 2017 | None | | | |
| US | 8855837 | B2 | 07 October 2014 | EP | 2142427 | A4 | 06 February 2013 |
| | | | | US | 2014095001 | A1 | 03 April 2014 |
| | | | | WO | 2008124377 | A1 | 16 October 2008 |
| | | | | EP | 2142427 | B1 | 18 June 2014 |
| | | | | US | 8694182 | B2 | 08 April 2014 |
| | | | | EP | 2142427 | A1 | 13 January 2010 |
| | | | | US | 2008249672 | A1 | 09 October 2008 |
| EP | 3024725 | A1 | 01 June 2016 | US | 9233753 | B2 | 12 January 2016 |
| | | | | WO | 2015050614 | A1 | 09 April 2015 |
| | | | | EP | 3024725 | A4 | 09 August 2017 |
| | | | | US | 2015028152 | A1 | 29 January 2015 |
| US | 2016355252 | A1 | 08 December 2016 | US | 10023300 | B2 | 17 July 2018 |
| US | 2018292835 | A1 | 11 October 2018 | US | 2018164825 | A1 | 14 June 2018 |
| | | | | US | 10012993 | B1 | 03 July 2018 |
| US | 2014095001 | A1 | 03 April 2014 | EP | 2142427 | A4 | 06 February 2013 |
| | | | | US | 8855837 | B2 | 07 October 2014 |
| | | | | WO | 2008124377 | A1 | 16 October 2008 |
| | | | | EP | 2142427 | B1 | 18 June 2014 |
| | | | | US | 8694182 | B2 | 08 April 2014 |
| | | | | EP | 2142427 | A1 | 13 January 2010 |
| | | | | US | 2008249672 | A1 | 09 October 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811199814